# EUROPÄISCHE PATENTSCHRIFT

(11) **EP 1 169 774 B1**
(45) Veröffentlichungstag und Bekanntmachung des Hinweises auf die Patenterteilung: **06.01.2010**
(21) Anmeldenummer: 01923575.3
(22) Anmeldetag: 15.02.2001
(51) Int. Cl.: H02P 8/40

(54) **VERFAHREN ZUR SYNCHRONSTEUERUNG MEHRERER SCHRITTMOTOREN**
METHOD FOR EFFECTING THE SYNCHRONOUS CONTROL OF SEVERAL STEPPING MOTORS
PROCEDE DE COMMANDE SYNCHRONISEE DE PLUSIEURS MOTEURS PAS A PAS

(30) Priorität: 17.02.2000 DE 10007201
(43) Veröffentlichungstag der Anmeldung: 09.01.2002
(73) Patentinhaber: Carl Zeiss MicroImaging GmbH, 07745 Jena (DE)
(72) Erfinder: KAUFHOLD, Tobias, 07749 Jena (DE); JORAM, Ralf, 91058 Erlangen (DE)
(74) Vertreter: Scholze, Humbert
(86) Internationale Anmeldenummer: PCT/EP2001/001664
(87) Internationale Veröffentlichungsnummer: WO 2001/061837

(56) Entgegenhaltungen:
- DE-A- 3 105 491
- DE-A- 19 822 256
- GB-A- 2 058 414
- US-A- 3 391 318
- PATENT ABSTRACTS OF JAPAN vol. 012, no. 244 (E-631), 9. Juli 1988 (1988-07-09) & JP 63 031499 A (AGENCY OF IND SCIENCE & TECHNOL), 10. Februar 1988 (1988-02-10)

## Beschreibung

Die Erfindung bezieht sich auf ein Verfahren zur Synchronsteuerung mehrerer Schrittmotoren SM₁, SM₂ ... SMₙ, die als Antriebe in einem Zustellsystem dienen, wobei die Schrittmotoren SM₁, SM₂ ... SMₙ mit einer Grundfrequenz fₐ angesteuert werden und jeweils eine Periode der Grundfrequenz fₐ einer vorgegebenen Schrittlänge SL proportional ist.

Aus dem Stand der Technik ist es bekannt, die für einen Schrittmotor per Ansteuerung definiert vorgegebenen Schrittwinkel in Inkremente einer Längsbewegung zu wandeln und auf dieser Grundlage Positioniersysteme zu betreiben, mit denen Verschiebungen von Gerätebaugruppen entlang eines Verstellbereiches bzw. einer Bahn hochgenau vorgenommen werden.

Bei entsprechender Beschaltung der Wicklungen bzw. Phasensteuerung eines Schrittmotors läßt sich eine sensible Ansteuerung und damit ein Fortschreiten der Drehbewegung in so kleinen Schrittwinkeln erzielen, daß auch für optische Feingeräte, wie beispielsweise Mikroskope mit Zoomeinrichtung, die präzise Positionierung der einzelnen Zoomgruppen erreicht wird, die zum Verändern der Vergrößerung bei Beibehaltung der Abbildungsschärfe erforderlich ist.

So sind beim derzeiten Stand der Entwicklung bei permanent erregten Schrittmotoren Schrittwinkel von 3,75°, bei Hybridschrittmotoren Schrittwinkel von 1,8° und bei Reluktanzschrittmotoren Schrittwinkel von 1° üblich. Die Wandlung der Dreh- in eine Längsbewegung wird in der Regel mit Spindelsystemen vorgenommen.

Für Anwendungen in Zoomobjektiven wie auch für andere Anwendungen sind Positioniersysteme entwickelt worden, bei denen jeweils einem Schrittmotor eine entlang einer Bahn zu verschiebende Baugruppe zugeordnet ist. Dabei besteht insbesondere bei Anwendung für Zoomobjektive die Notwendigkeit, die verschiedenen Baugruppen mit unterschiedlichen Geschwindigkeiten zu verschieben, damit nach einer Verschiebung die Zoomgruppen sich in einem vorbestimmten Abstand zueinander befinden, der sowohl der neu einzustellenden Vergrößerung genügen muß als auch zur Beibehaltung der Abbildungsschärfe erforderlich ist. Eine nach diesem Prinzip arbeitende "Anordnung zur direkten Steuerung der Bewegung eines Zoomsystems in einem Stereomikroskop" ist beispielsweise in WO 99/60436 beschrieben.

Im Stand der Technik, wie zum Beispiel im Dokument JP-A-63031499 sind bei der Ansteuerung von mehreren, zu einem Positioniersystem gehörenden Schrittmotoren jedem der Schrittmotoren bzw. jeder Bahn eine Zähler- bzw. Timereinheit zugeordnet. Alle Zähler- bzw. Timereinheiten werden mit verschiedenen Frequenzen und Zeiten geladen, die jeweils auf eine zugeordnete Bahn bezogen und unter Zugrundelegung der entsprechenden Positionieraufgabe errechnet worden sind.

Die Schrittmotoren werden gemeinsam gestartet, und nach Ablauf jeweils einer vorgegebenen Sequenz von Perioden der Grund- bzw. Ansteuerfrequenz wird über Ausgabeeinheiten die Verschiebung veranlaßt, wobei stets eine Ausgabeeinheit einem Schrittmotor zugeordnet ist. Für eine nachfolgende weitere Verstellung werden die Zähler- bzw. Timereinheiten der entsprechend neu geladen und gestartet.

Dieser Ablauf wird für jede neue Positioniervorgabe wiederholt, wobei jedesmal die Baugruppen die vorgegebenen Ziele auf ihrer Bahn erreichen. Dabei werden die Baugruppen in gleichen Zeiten über unterschiedliche Weglängen verschoben, d.h. sie erreichen ihre Zielpositionen mit unterschiedlichen Geschwindigkeiten; diese werden aufgrund der Ansteuerung der einzelnen Schrittmotoren mit unterschiedlichen Frequenzen erzielt.

Da jede Bahn, insbesondere bei der Verstellung von Zoomgruppen, auch noch gesonderte Beschleunigungsprofile aufweist, erfordert ein in dieser Weise ausgeführtes Positioniersystem verhältnismäßig viel Speicherkapazität und demzufolge auch eine recht lange Berechnungsdauer.

Hinzu kommt außerdem, daß aufgrund der geforderten hohen Zustellgenauigkeit - die maximale Bahnabweichung soll im vorliegenden Fall nicht mehr als 10µm bei allen Antrieben betragen - jede Zähler- bzw. Timereinheit aus mindestens drei Einzelzählern besteht.

Um die maximal mögliche Verstellgeschwindigkeit erreichen zu können, wird der Schrittmotor, der die weiteste Verschiebung auf der ihm zugeordneten Bahn vorzunehmen hat, als führender Antrieb betrachtet, an dem sich alle anderen Antriebe, denen kürzere Zustellweiten zugeordnet sind, zu orientieren haben, indem diese langsamer betrieben werden.

Aus der bisherigen Darstellung wird klar, daß der verhältnismäßig hohe Aufwand für Speicherkapazität und Rechenzeit seine Ursache in der gesonderten Frequenzaufbereitung für jeden einzelnen Schrittmotor, eines solchen Positioniersystems hat.

Davon ausgehend liegt der Erfindung die Aufgabe zugrunde, ein Verfahren der eingangs beschriebenen Art so weiterzuentwickeln, daß unter Beibehaltung einer hohen Positioniergenauigkeit und optimalen Verstellgeschwindigkeit die Steuerung des gesamten Positioniersystems bei reduziertem technischen Aufwand möglich ist.

Erfindungsgemäß ist vorgesehen, daß mit jeder Periode derselben Grundfrequenz fₐ bei den einzelnen Schrittmotoren SM₁, SM₂ ... SMₙ unterschiedliche Schrittlängen SL₁, SL₂ ... SLₙ ausgelöst werden, wobei dem Schrittmotor SM₁ eine spezifische Schrittlänge SL₁, dem Schrittmotor SM₂ eine spezifische Schrittlänge SL₂ zugeordnet ist usw.

Auf diese Weise ist es nicht mehr erforderlich, für jeden der Schrittmotoren gesonderte Ansteuerfrequenzen aufzubereiten. Alle Schrittmotoren können nun mit gleicher Frequenz angesteuert werden und es ist lediglich nur noch eine Zähler- bzw. Timereinheit für alle Schrittmotoren des Positioniersystems erforderlich.

Da bei Ansteuerung mit ein und derselben Frequenz jeder Schrittmotor die ihm zugeordnete spezifische Schrittlänge SL₁, SL₂ ... SLₙ zurücklegt, wird auf einfache Weise erreicht, daß die einzelnen Schrittmotoren SM₁, SM₂ ... SMₙ mit unterschiedlichen Geschwindigkeiten fahren und nach Ende einer Verstellbewegung jede der zu verschiebenden Baugruppen unterschiedliche Verschiebeweiten zurückgelegt und jeweils ihre Zielposition erreicht hat.

In einer bevorzugten Ausgestaltung der Erfindung ist vorgesehen, daß beispielsweise der Schrittmotor SM₁ mit einer Schrittlänge SL₁ betrieben wird, die dem Vollschritt des Schrittmotors SM₁ bei einer kompletten Drehfelddrehung entspricht. Der Schrittmotor SM₁ ist dabei mit einer Baugruppe gekoppelt, die bei Auslösung eines Positionierbefehles im Vergleich zu den anderen Baugruppen die größere Verschiebeweite zurückzulegen hat.

Den übrigen Schrittmotoren SM₂ ... SMₙ sind kleinere Schrittlängen SL₂ ... SLₙ zugeordnet, die jeweils einer teilweisen Drehfelddrehung entsprechen. Die mit diesen Schrittmotoren SM₂ ... SMₙ gekoppelten Baugruppen legen also geringere Verschiebeweiten zurück.

Der Unterteilung der vollen, sich aus einer kompletten Drehfelddrehung ergebenden Schrittlänge SM₁ in mehrere Teilschritte, in sogenannte "Mikroschritte", beruht darauf, daß durch angepaßte Steuerung der in die einzelnen Phasen einzuprägenden Ströme theoretisch jede Lage des Drehmomentenvektors innerhalb einer Drehfelddrehung einstellbar ist. Diese Art der Steuerung ist an und für sich bekannt und beispielsweise in Schörlin, F. "Mit Schrittmotoren steuern, regeln und antreiben", Fransisverlag 1996, 2. Auflage 1996 beschrieben.

Auf diese Weise läßt sich eine Anzahl z diskreter Mikroschritte erzeugen. Zur praktischen Nutzung dieses Effektes ist die Teilung eines Vollschrittes in z=100 Mikroschritte ausreichend und hat sich als Grundlage für die Konfiguration von Positioniersystemen durchaus bewährt.

Insofern besteht eine Ausgestaltung der Erfindung darin, daß für die Schrittlängen SL₂ ... SLₙ gilt SL₁=k₁/z, SL₂=k₂/z ... SLₙ=kₙ/z. Hierbei sind k₁ bis kₙ Äquivalente der je Periode der Grundfrequenz fₐ vorzugebenden Mikroschritte.

Unter der Voraussetzung, daß dem Schrittmotor SM₁ eine Vollschrittlänge zugeordnet wird, die einer kompletten Drehfelddrehung entspricht, gilt für den Schrittmotor SM₁ bei z=100 das Äquivalent k₁=100. Bei der Vorgabe von k₁=100 würde demzufolge die spezifische Schrittlänge SL₁ des Schrittmotors SM₁ 100 Mikroschritte bzw. eine Vollschrittlänge betragen, d.h. mit jedem Ansteuerimpuls bzw. jeder Periode der Grundfrequenz fₐ wird eine Verschiebeweite ausgelöst, die einer Vollschrittlänge bzw. 100 Mikroschritten entspricht.

Wird beispielhaft dem Schrittmotor SMₙ das Äquivalent kₙ=25 zugeordnet, so würden über den Schrittmotor SM₂ bei Ansteuerung mit derselben Grundfrequenz fₐ je Ansteuerimpuls 25/100 Mikroschritte ausgelöst. Die Geschwindigkeit des Schrittmotors SM₁ wäre demzufolge um den Faktor "vier" höher als die Geschwindigkeit des Schrittmotors SMₙ.

Dies gilt im übertragenen Sinne für die übrigen Schrittmotoren SM₂ ... SMₙ₋₁ desselben Positioniersystems auch, wenn diesen entsprechend der vorgesehenen Verstellweite der jeweils angekoppelten Baugruppen Äquivalente k₂ ... kₙ₋₁ zugeordnet werden. Auf diese Weise fahren alle Schrittmotoren SM₁, SM₂ ... SMₙ bei Ansteuerung mit derselben Grundfrequenz fₐ mit unterschiedlichen Geschwindigkeiten und erreichen nach Ende einer vorgegebenen Sequenz von Perioden gleichzeitig die vorgegebenen Zielpositionen.

In einer ganz besonders bevorzugten Ausgestaltung der Erfindung ist vorgesehen, daß den einzelnen Schrittmotoren SM₁, SM₂ ... SMₙ bzw. den auf der entsprechenden Bahn zu verschiebenden Baugruppen charakteristische Zustellpositionen, wie beispielsweise Start-, Wende- und/oder Haltepositionen, zuordnet werden und die Schrittlängen SL₁, Sl₂ ... SLₙ durch Äquivalente k₁, k₂ ... kₙ in Abhängigkeit von den Abständen zwischen charakteristischen Zustellpositionen auf einer Bahn so vorgegeben werden, daß bei Ansteuerung aller Schrittmotoren SM₁, SM₂ ... SMₙ mit derselben Anzahl Perioden der Grundfrequenz fₐ die Verschiebung zwischen zwei Zustellpositionen veranlaßt wird.

Die Erfindung soll nachfolgend anhand eines Ausführungsbeispieles näher erläutert werden. In den zugehörigen Zeichnungen zeigen
- Fig.1: ein Beispiel für die Teilung einer Vollschrittlänge in Mikroschritte,
- Fig.2: ein Beispiel für die erfindungsgemäße Ansteuerung mehrerer Schrittmotoren,
- Fig.3: im Vergleich zu Fig.2 die Ansteuerung mehrerer Schrittmotoren innerhalb eines Positioniersystems nach dem bekannten Stand der Technik.

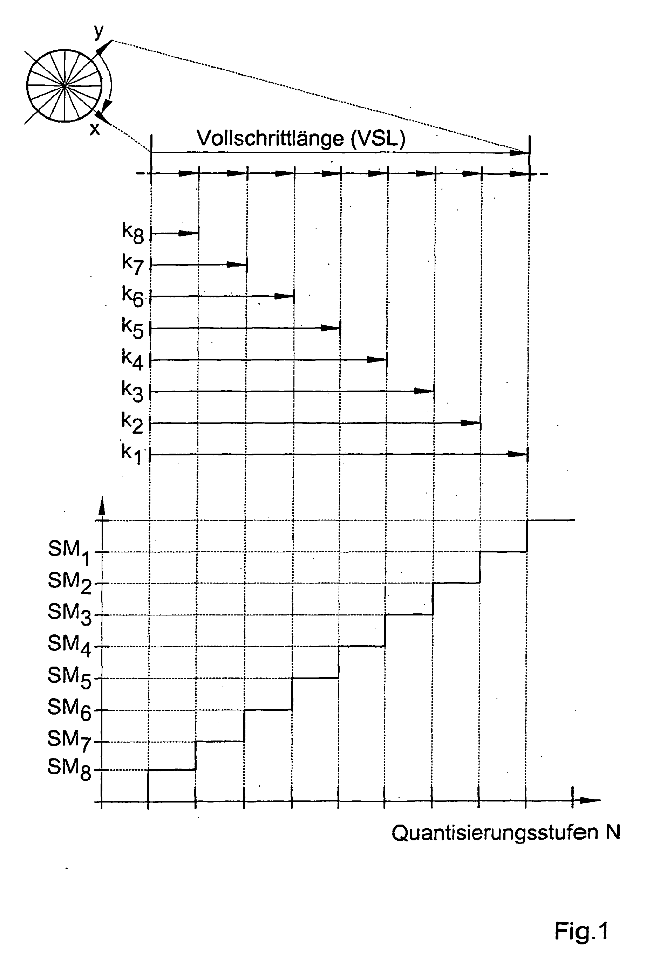

Anhand der Fig.1 soll zunächst das Zustandekommen von Mikroschritten erläutert werden. Dazu sind in Fig.1 in der oberen Bildhälfte links zunächst die Drehmomentvektoren eines Schrittmotors dargestellt. Hier entspricht die eingezeichnete Vierteldrehung zwischen der Richtungsachse Y und der Richtungsachse X einer kompletten Drehfelddrehung.

Diese Drehfelddrehung soll einer Vollschrittlänge (VSL) entsprechen, die auf das Diagramm in der Bildmitte übertragen ist. Die Mikroschritte ergeben sich aus Teildrehungen des Drehfeldes und sind in der Darstellung oben links als eine Schar von Durchmessern eingetragen. Der Übersichtlichkeit halber wurde die Anzahl der Mikroschritte hier lediglich auf z=8 begrenzt. Damit entspricht die mit jedem Mikroschritt ausgelöste Verschiebeweite einem Achtel der mit einem Vollschritt ausgelösten Verschiebeweite.

Wird also beispielsweise dem Schrittmotor SM₁ das Äquivalent k₁=8 zugeordnet, ergibt sich dessen spezifische Schrittlänge SL₁ aus SL₁=k₁/z=8/8 mit acht Mikroschritten bzw. einer Vollschrittlänge. Je Ansteuerimpuls bzw. je Periode der Grundfrequenz fₐ wird mit diesem Schrittmotor SM₁ also eine Verschiebeweite von acht Mikroschritten erzielt.

Ein Schrittmotor SM₅ dagegen mit beispielsweise einem zugeordneten Äquivalent k₅=4 legt bei derselben Sequenz von Ansteuerimpulsen lediglich die Hälfte des Weges, nämlich vier Mikroschritte zurück (vgl. Fig.1).

Hieraus folgt, daß die Schrittmotoren SM₁, SM₂ ... SMₙ in Abhängigkeit von den zugeordneten Äquivalenten k₁, k₂ ... kₙ mit unterschiedlichen Geschwindigkeiten fahren. Wird nun beispielsweise anstelle von z=8 die feinere Geschwindigkeitsabstufung auf der Grundlage von z=100 Mikroschritten vorgenommen, so ist leicht einsehbar, daß nach diesem Prinzip eine sehr präzise Positionierung der verschiedenen Baugruppen möglich ist.

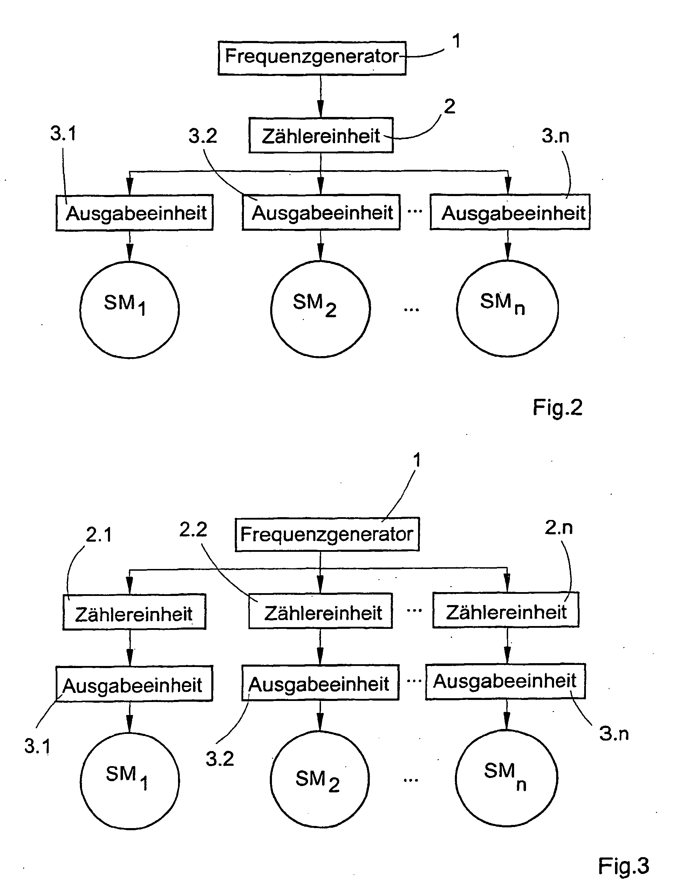

Ein Beispiel für die erfindungsgemäße Ansteuerung mehrerer Schrittmotoren SM₁, SM₂ ... SMₙ ist in Fig.2 dargestellt. Hier ist einem Frequenzgenerator 1 eine Zählereinheit 2 nachgeordnet, die über Ausgabeeinheiten 3.1, 3.2 ... 3.n mit Schrittmotoren SM₁, SM₂ ... SMₙ verknüpft sind. Dabei wird mit dem Frequenzgenerator 1 die Grundfrequenz fₐ vorgegeben, mit der Zählereinheit 2 wird die Umsetzung der Grundfrequenz fₐ in eine Pulssequenz vorgenommen, die der jeweils gewünschten Verschiebeweite der Baugruppe von einer Startposition in eine Halteposition entspricht, und über die Ausgabeeinheiten 3.1, 3.2 ... 3.n erfolgt die Ausgabe der aktuellen Ströme zur Lagesteuerung des Drehfeldes für jeden einzelnen der Schrittmotoren SM₁, SM₂ ... SMₙ in Abhängigkeit von der vorgegebenen spezifischen Schrittlänge SL₁, SL₂ ... SLₙ.

Der Vorteil des erfindungsgemäßen Verfahrens ergibt sich aus dem Vergleich der Darstellung nach Fig.2 mit Fig.3, wobei in Fig.3 die Verfahrensweise der Synchronsteuerung nach dem Stand der Technik dargestellt ist. Aus dem Vergleich wird ersichtlich, daß anstelle mehrerer Zählereinheit 2.1, 2.2 ... 2.n, von denen in Fig.3 jeweils eine einem der Schrittmotoren SM₁, SM₂ ... SMₙ zugeordnet ist, in Fig.2 und damit erfindungsgemäß nun nur noch eine gemeinsame Zählereinheit 2 benötigt wird.

Der Vorteil, der sich aus der Anwendung der Erfindung ergibt, besteht im wesentlichen in der Reduzierung des Hard- und Softwareaufwandes. Wird in Ergänzung des beschriebenen Beispieles ein synchrones Durchschaltsignales genutzt, können auch die Ausgabeeinheiten 3.1, 3.2 ... 3.n zu einer Ausgabeeinheit zusammengefaßt werden, die im Multiplexbetrieb alle Motoren bedient.

Außerdem ist vorteilhaft, daß beliebig viele Schrittmotoren in ein Positioniersystem einbezogen werden können, ohne daß dadurch der Aufwand für die Ansteuerung bedeutend anwächst.

Das gesamte Positioniersystem kann durch Veränderung allein der Grundfrequenz fₐ beschleunigt oder gebremst werden, wobei der Quantisierungsfehler konstant bleibt. Hinzu kommt außerdem, daß der Quantisierungsfehler einfach berechenbar und damit besser beherrschbar wird.

Ein wesentlicher Vorteil besteht weiterhin in der verbesserten Laufruhe aller Synchronmotoren, da die Schrittausgabe immer zu gleichen Zeiten erfolgt, wodurch eine gegenseitige Überlagerung der Ansteuerfrequenzen vermieden wird.
Aufgrund dessen ist das erfindungsgemäße Verfahren auch sehr gut in Verbindung mit nichtlinearen Beschleunigungsrampen geeignet.

Aus alledem folgt, daß das erfindungsgemäße Positioniersystem insbesondere zur Anwendung in Zoomobjektiven mit beliebiger Anzahl an Zoomgruppen geeignet ist.

### Bezugszeichenliste

- 1: Frequenzgenerator
- 2: Zählereinheit
- 3: Ausgabeeinheit
- X, Y: Richtungsachsen
- k: Äquvivalent
- z: Mikroschritt
- SL₁, SL₂, SLₙ: Schrittlängen
- SM₁, SM₂, SMₙ: Schrittmotoren
- fₐ: Grundfrequenz

## Patentansprüche

1. Verfahren zur Synchronsteuerung mehrerer Schrittmotoren (SM₁, SM₂ ... SMₙ), die als Antriebe in einem Zustellsystem dienen, wobei die Schrittmotoren (SM₁, SM₂ ... SMₙ) mit einer Grundfrequenz (fₐ) angesteuert werden und jeweils eine Periode der Grundfrequenz (fₐ) einer vorgegebenen Schrittlänge (SL) der Zustellung proportional ist, **dadurch gekennzeichnet, daß** mit jeweils einer Periode derselben Grundfrequenz (fₐ) bei den einzelnen Schrittmotoren (SM₁, SM₂ ... SMₙ) unterschiedliche Schrittlängen (SL₁, SL₂ ... SLₙ) ausgelöst werden, wobei einem ersten Schrittmotor (SM₁) eine spezifische erste Schrittlänge (SL₁), einem zweiten Schrittmotor (SM₂) eine spezifische zweite Schrittlänge (SL₂) und so weiter zugeordnet ist.

2. Verfahren nach Anspruch 1, **dadurch gekennzeichnet, daß** der ersten Schrittmotor (SM₁) im Vollschrittbetrieb betrieben wird, wobei ihm als Schrittlänge die erste Schrittlänge (SL₁) zugeordnet ist, die sich aus einer kompletten Drehfelddrehung bei dem ersten Schrittmotor (SM₁) ergibt, während den übrigen Schrittmotoren (SM₂, SM₃ ... SMₙ) jeweils Schrittlängen (SL₂, SL₃ ... SLₙ) zugeordnet sind, die einer teilweisen Drehfelddrehung bei dem jeweiligen Schrittmotor (SM₂, SM₃ ... SMₙ) entsprechen.

3. Verfahren nach Anspruch 1 oder 2, **dadurch gekennzeichnet, daß** eine Drehfelddrehung in z Mikroschritte unterteilt ist und für die Schrittlängen (SL₁, SL₂ ... SLₙ) gilt SL₁=k₁/z, SL₂=k₂/z ... SLₙ=kₙ/z, mit Äquivalenten k₁ ... kₙ, die ein Maß für die Anzahl der jeweils für einen Schrittmotor (SM₁, SM₂ ... SMₙ) vorzugebenden Mikroschritte sind.

4. Verfahren nach Anspruch 3, **dadurch gekennzeichnet, daß**
- den einzelnen Schrittmotoren (SM₁, SM₂ ... SMₙ) innerhalb des Zustellsystems Bahnen mit charakteristischen Zustellpositionen, bevorzugt Start-, Wende- und/oder Haltepositionen, zugeordnet werden und
- die Schrittlängen (SL₁, SL₂ ... SLₙ) und die Äquivalente k₂, k₃ ... kₙ in Abhängigkeit von den Abständen zwischen den charakteristischen Zustellpositionen auf den Bahnen so vorgegebenden werden, daß bei Ansteuerung aller Schrittmotoren (SM₁, SM₂ ... SMₙ) mit derselben Sequenz von Perioden der Grundfrequenz fₐ die Zustellung auf den Bahnen mit unterschiedlichen Geschwindigkeiten veranlaßt wird, wodurch nach Ende der Sequenz auf allen Bahnen die charakteristischen Zustellpositionen erreicht sind.

## Claims

1. Method for synchronized control of a plurality of stepping motors (SM₁, SM₂ ... SMₙ) which serve as drives in a delivery system, the stepping motors (SM₁, SM₂ ... SMₙ) being driven at a fundamental frequency (fₐ), and in each case a period of the fundamental frequency (fₐ) is proportional to a prescribed step size (SL) of the delivery, **characterized in that** different step sizes (SL₁, SL₂ ... SLₙ) are initiated with in each case one period of the same fundamental frequency (fₐ) for the individual stepping motors (SM₁, SM₂ ... SMₙ), a specific first step size (SL₁) being assigned to a first stepping motor (SM₁), a specific second step size (SL₂) being assigned to a second stepping motor (SM₂), and so on.

2. Method according to Claim 1, **characterized in that** the first stepping motor (SM₁) is operated in full-step mode, it being assigned as step size the first step size (SL₁), which results from a complete rotating field rotation for the first stepping motor (SM₁), while the remaining stepping motors (SM₂, SM₃ ... SMₙ) are respectively assigned step sizes (SL₂, SL₃ ... SLₙ) which correspond to a partial rotating field rotation of the respective stepping motor (SM₂, SM₃ ... SMₙ).

3. Method according to Claim 1 or 2, **characterized in that** a rotating field rotation is subdivided into z microsteps, and it holds true for the step sizes (SL₁, SL₂ ... SLₙ) that SL₁ = k₁/z, SL₂ = k₂/z ... SLₙ = kₙ/z, with equivalents k₁ ... kₙ which are a measure of the number of the microsteps respectively to be prescribed for a stepping motor (SM₁, SM₂ ... SMₙ).

4. Method according to Claim 3, **characterized in that**
- the individual stepping motors (SM₁, SM₂ ... SMₙ) within the delivery system are assigned paths with characteristic delivery positions, preferably starting, reversing and/or stopping positions, and
- the step sizes (SL₁, SL₂ ... SLₙ) and the equivalents k₂, k₃ ... kₙ are prescribed as a function of the distances between the characteristic delivery positions on the paths such that the delivery on the paths is prompted at different speeds when all stepping motors (SM₁, SM₂ ... SMₙ) are driven with the same sequence of periods of the fundamental frequency fₐ, as a result of which the characteristic delivery positions are reached following the end of the sequence on all paths.

## Revendications

1. Procédé de commande synchrone de plusieurs moteurs pas à pas (SM₁, SM₂, ..., SMₙ) qui servent de mécanismes d'entraînement dans un système d'approche, les moteurs pas à pas (SM₁, SM₂, ..., SMₙ) étant commandés par une fréquence fondamentale (fₐ) et une période de la fréquence fondamentale (fₐ) étant à chaque fois proportionnelle à une longueur de pas (SL) prédéfinie de l'approche, **caractérisé en ce que** des longueurs de pas (SL₁, SL₂, ..., SLₙ) différentes sont respectivement déclenchées avec une période de la même fréquence fondamentale (fₐ) sur chacun des moteurs pas à pas (SM₁, SM₂, ..., SMₙ), une première longueur de pas spécifique (SL₁) étant associée à un premier moteur pas à pas (SM₁), une deuxième longueur de pas spécifique (SL₂) à un deuxième moteur pas à pas (SM₂), etc.

2. Procédé selon la revendication 1, **caractérisé en ce que** le premier moteur pas à pas (SM₁) est utilisé en mode pas entier, la longueur de pas qui lui est associée étant la première longueur de pas (SL₁), laquelle résulte d'une rotation complète du champ tournant sur le premier moteur pas à pas (SM₁), alors qu'aux autres moteurs pas à pas (SM₂, SM₃, ..., SMₙ) sont respectivement associées des longueurs de pas (SL₂, SL₃, ..., SLₙ) qui correspondent à rotation partielle du champ tournant sur le moteur pas à pas (SM₂, SM₃, ..., SMₙ) correspondant.

3. Procédé selon la revendication 1 ou 2,
**caractérisé en ce qu'**une rotation du champ tournant est divisée en z micropas et la règle SL₁ = k₁/z, SL₂ = k₂/z, ..., SLₙ = kₙ/z s'applique aux longueurs de pas (SL₁, SL₂, ..., SLₙ), avec des k₁, ... kₙ équivalents qui sont un facteur correspondant au nombre de micropas à prédéfinir pour un moteur pas à pas (SM₁, SM₂, ..., SMₙ).

4. Procédé selon la revendication 3, **caractérisé en ce que**
- les moteurs pas à pas (SM₁, SM₂, ..., SMₙ) individuels sont associés à l'intérieur du système d'approche à des trajectoires ayant des positions d'approche caractéristiques, de préférence des positions de départ, de retournement et/ou d'arrêt, et
- les longueurs de pas (SL₁, SL₂, ..., SLₙ) et les k₂, k₃, ... kₙ équivalents sont prédéfinis en fonction des écarts entre les positions d'approche caractéristiques sur les trajectoires de telle sorte que lorsque tous les moteur pas à pas (SM₁, SM₂, ..., SMₙ) sont commandés avec la même séquence de périodes de la fréquence fondamentale (fₐ), l'approche est initiée sur les trajectoires avec des vitesses différentes, ce qui a pour effet que les positions d'approche caractéristiques sont atteintes sur toutes les trajectoires après la fin de la séquence.
